# EUROPEAN PATENT APPLICATION

(11) **EP 2 631 319 A1**
(43) Date of publication of application: **28.08.2013**
(21) Application number: 10858701.5
(22) Date of filing: 24.11.2010
(51) Int. Cl.: C23C 2/06, C23C 2/02, C23C 2/40, C22C 38/00

(54) **GALVANIZED STEEL SHEET HAVING EXCELLENT COATABILITY, COATING ADHESION, AND SPOT WELDABILITY, AND METHOD FOR MANUFACTURING SAME**

(30) Priority: 21.10.2010 KR 20100103041
(71) Applicant: Posco, Pohang Kyungsangbook-do 790-300 (KR)
(72) Inventor: LEE, Jung-Woo, Gwangyang Jeollanam-do 545-711 (KR); KIM, Myung-Soo, Gwangyang Jeollanam-do 545-711 (KR); LEE, Seung-Bok, Gwangyang Jeollanam-do 545-711 (KR); CHOI, Jin-Won, Gwangyang Jeollanam-do 545-711 (KR); CHOI, Du-Youl, Gwangyang Jeollanam-do 545-711 (KR); KIM, Young-Ha, Gwangyang Jeollanam-do 545-711 (KR); LEE, Ju-Youn, Gwangyang Jeollanam-do 545-711 (KR); KANG, Dae-Young, Gwangyang Jeollanam-do 545-711 (KR)
(74) Representative: Zech, Stefan Markus
(86) International application number: PCT/KR2010/008350
(87) International publication number: WO 2012/053694

(57) **Abstract**

The present invention provides a hot-dip galvanized steel sheet having excellent plating qualities, plating adhesion and spot weldability, in which an alloy phase is formed at the interface between a base steel sheet and a galvanized layer, and a manufacturing method thereof.

## Description

### [Technical Field]

The present invention relates to a hot-dip galvanized steel sheet, and more particularly to a hot-dip galvanized steel sheet having excellent plating qualities, plating adhesion and spot weldability and a manufacturing method thereof.

### [Background Art]

Steel sheets are widely used for building materials, structures, electric home appliances and automotive bodies due to their excellent corrosion resistance. Steel sheets which have recently been frequently used can be divided into hot-dip galvanized steel sheets and galvannealed steel sheets.

Hot-dip galvanized steel sheets are obtained by hot-dip galvanizing a base steel sheet and are frequently used for automotive bodies, because they are easy to paint and have excellent corrosion resistance. Hot-dip galvanized steel sheets are manufactured by immersing a steel sheet in an Al-containing galvanizing bath, and by such galvanizing, an alloying barrier layer of Fe₂Al₅ is formed at the interface between the base steel sheet and the galvanized layer. The alloying barrier layer functions to increase the adhesion between the base steel sheet and the galvanized layer. However, in the case of high-strength steel sheets containing a large amount of Si, Mn or Al , in portions thereof in which the alloying barrier layer is not formed, Si, Mn or Al is diffused to the surface of the steel sheet to form oxides, which have poor wettability with zinc and so are not galvanized, and thus the galvanized layer is peeled off. In addition, in a spot welding process, the alloying barrier layer interferes with the diffusion of Fe from the base steel sheet into the galvanized layer, so that the alloying between a welding electrode and the galvanized layer is promoted, thereby reducing the service life of the electrode.

This problem, wherein spot weldability is deteriorated due to the presence of the alloying barrier layer at the interface between the galvanized layer and the base steel sheet, can be solved by eliminating the alloying barrier layer. The elimination of the alloying barrier layer can be easily achieved not by adding aluminum to the galvanizing bath or reducing the content of aluminum to 0.1 wt% or less. However, in this case, the diffusion between Zn and Fe in the galvanizing bath occurs, so that a thick Zn-Fe alloy layer is formed at the interface between the base steel sheet and the galvanized layer. The thick zinc-iron alloy layer thus formed has a high level of hardness compared to zinc or iron and has low deformation resistance, and thus, the galvanized layer is easily peeled off by friction with a die during a forming process. Furthermore, in the case of high-strength steel sheets containing a large amount of Si or Mn, the phenomenon in which an Si or Mn oxide formed at the interface between the base steel sheet and the galvanized layer is reduced by the aluminothermic reaction is inhibited, thus deteriorating the plating qualities and plating adhesion of the steel.

Conventional methods for simultaneously ensuring the spot weldability and coating adhesion of galvanized steel sheets include Japanese Patent Laid-Open Publication No. 2005-240080. This discloses a method for manufacturing a galvanized steel sheet, in which a conventional galvanizing bath containing 0.17-0.3 wt% aluminum is used, and the temperature at which a base steel sheet is introduced into the galvanizing bath is lower than the temperature of the galvanizing bath by 20∼40 °C, whereby the ratio of the area covered by the alloying barrier layer formed at the interface between the steel sheet and the galvanized layer is 40-90%.

In the method disclosed in the above Japanese Patent Publication, the plating adhesion of the steel sheet is excellent due to the alloying barrier layer, and the pure galvanized layer is melted during a spot welding process in the same manner as the case of a conventional galvanized steel sheet. Thus, in the portion in which the alloying barrier layer is not covered, the base steel sheet comes into direct contact with a welding electrode, so that a Fe-Zn-0 coating film is formed at the tip of the electrode, thus increasing the service life of the electrode. If a galvanized steel sheet is manufactured using this method, iron can be diffused to the galvanized layer through the portion in which the alloying barrier layer is not present, and thus the phenomenon in which zinc is alloyed with the surface of the welding electrode can be somewhat reduced.

However, in this method, because the amount of the portion in which the alloying barrier layer is not covered is about 10-60%, the diffusion of Fe into the galvanized layer within a short time cannot be expected. Thus, if an electric current is applied to the steel sheet through the welding electrode, the melting of the galvanized layer will necessarily occur, and for this reason, the above method does not significantly inhibit the phenomenon in which melted zinc is alloyed with the electrode.

Accordingly, there is an urgent need for a technology allowing a hot-dip galvanized steel sheet to have excellent plating qualities, plating adhesion and spot weldability.

### [Disclosure]

### [Technical Problem]

An aspect of the present invention provides a hot-dip galvanized steel sheet having improved plating qualities, plating adhesion and spot weldability, in which an alloy phase is appropriately formed at the interface between a base steel sheet and a galvanized layer, and a manufacturing method thereof.

### [Technical Solution]

According to one aspect of the present invention, there is provided a hot-dip galvanized steel sheet having excellent plating qualities, plating adhesion and spot weldability, in which an alloy phase is formed at the interface between a base steel sheet and a galvanized layer.

According to another aspect of the present invention, there is provided a hot-dip galvanized steel sheet having excellent plating qualities, plating adhesion and spot weldability, in which the alloy phase is an Fe-Zn alloy phase that accounts for 1-20% of the cross-sectional area of the galvanized layer.

According to another aspect of the present invention, there is provided a hot-dip galvanized steel sheet having excellent plating qualities, plating adhesion and spot weldability, in which the alloy phase is an Fe-Ni-Zn alloy phase that accounts for 1-20% of the cross-sectional area of the galvanized layer.

According to another aspect of the present invention, there is provided a method for manufacturing a hot-dip galvanized steel sheet having excellent plating qualities, plating adhesion and spot weldability, the method including feeding and immersing a base steel sheet in a galvanizing bath having an effective Al concentration of (C_{Al}) of 0.11-0.14 wt% and a temperature (Tp) of 440∼460 °C, thereby hot-dip galvanizing the base steel sheet, wherein the temperature (Xₛ) at which the base steel sheet is fed into the galvanizing bath satisfies the following relationship: (Xₛ-Tₚ)/2C_{Al}= 20-100 (X_{S}: the temperature at which the steel sheet is fed into the galvanizing bath, Tₚ: the temperature of the galvanized steel sheet, and C_{Al}: the Al content (wt%) of the galvanizing bath).

According to another aspect of the present invention, there is provided a method for manufacturing a hot-dip galvanized steel sheet having excellent plating qualities, plating adhesion and spot weldability, the method including: coating a base steel sheet with Ni in a coating amount (C_{Ni}) of 0.1-1.0 g/m²; heating the Ni-coated steel sheet in a reducing atmosphere; cooling the heated steel sheet to the temperature (X_{S}) at which the steel sheet is fed into a galvanizing bath; and feeding and immersing the cooled steel sheet in the galvanizing bath having an effective Al concentration (C_{Al}) of 0.11-0.14 wt% and a temperature (T_{P}) of 440-460 °C, wherein the temperature (X_{S}) at which the steel sheet is fed into the galvanizing bath satisfies the following relationship: C_{Ni} · (X_{S}-T_{P})/2C_{Al} = 5-100.

### [Advantageous Effects]

As described above, in the hot-dip galvanized steel sheet which is provided according to the present invention, the alloy phase is appropriately formed at the interface between the base steel sheet and the interface, whereby it is possible to prevent the galvanized layer from being peeled off under conventional automotive manufacturing conditions, thereby improving the plating qualities and plating adhesion of the galvanized steel sheet and also increasing the service life of spot welding electrodes.

### [Description of Drawings]

The above and other aspects, features and other advantages of the present invention will be more clearly understood from the following detailed description taken in conjunction with the accompanying drawings, in which:
FIG. 1 is a photograph showing the cross section of a hot-dip galvanized steel sheet according to Comparative Example 1-1;
FIG. 2 is a photograph showing the cross section of a hot-dip galvanized steel sheet according to Inventive Example 1-6;
FIG. 3 is a schematic view showing the interface between a galvanized layer and an AHSS steel galvanized according to a conventional method;
FIG. 4 is a schematic view showing the interface between a galvanized layer and an AHSS steel galvanized according to the method of the present invention; and
FIG. 5 shows an 0-T bending test method.

### [Best Mode]

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the thicknesses of layers and regions are exaggerated for clarity. Like reference numerals in the drawings denote like elements, and thus their description will be omitted.

The present invention relates to a method for manufacturing a continuous hot-dip galvanized steel sheet, the method including: removing impurities, including rolling oil and iron, from a cold-rolled steel sheet; subjecting the steel sheet to a conventional annealing process; and immersing the steel sheet in a hot-dip galvanizing bath to manufacture a hot-dip galvanized steel sheet; or a method including: pickling a hot-rolled steel sheet; heating the pickled steel sheet; and immersing the heated steel sheet in a hot-dip galvanizing bath to manufacture a hot-dip galvanized steel sheet, wherein an alloy phase is formed between the steel sheet and the galvanized sheet, thereby preventing the galvanized layer from being exfoliated under conventional forming conditions and increasing the service life of a welding electrode during spot welding to improve weldability.

Hereinafter, the hot-dip galvanized steel sheet of the present invention will be described in detail.

The present invention provides a hot-dip galvanized steel sheet in which an alloy phase is formed at the interface between the base steel sheet and the galvanized layer.

In one aspect of the present invention, the alloy phase is preferably an Fe-Zn alloy phase that accounts for 1-20% of the cross-sectional area of the galvanized layer.

The Fe-Zn alloy phase is formed by the diffusion of Zn into the base steel sheet after the galvanizing of the base steel sheet.

In a conventional method, when hot-dip galvanizing is carried out, Al in the galvanizing bath preferentially reacts with the base steel sheet, so that an intermetallic compound of Fe-Al-Zn, that is, an alloying barrier layer (Fe₂Al₅₋ₓZnₓ), is formed on the surface of the base steel sheet. However, in the present invention, the Al content of the galvanizing bath is controlled at a low level, and the temperature of the galvanizing bath and the feed temperature of the steel sheet are controlled, such that the alloying barrier layer at the interface between the base steel sheet and the galvanized layer is insufficiently formed and the Fe-Zn alloy layer is appropriately formed.

The reason why the ratio of the Fe-Zn alloy phase is limited as described is as follows. If the ratio of the Fe-Zn alloy phase is less than 1%, a thick alloying barrier layer will be partially present at the interface between the base steel sheet and the galvanized layer, thus increasing the plating adhesion of the steel sheet, but the alloying barrier layer will interfere with the diffusion of Fe from the base steel sheet into the galvanized steel sheet during a spot welding process, thus deteriorating the weldability of the steel sheet. On the other hand, if the ratio of the Fe-Zn alloy phase is more than 20%, Fe in the base steel sheet will be rapidly diffused into the galvanized layer by the alloy phase, so that the galvanized layer will become an Fe-Zn alloy, and thus the reaction between a welding electrode and zinc will be inhibited so as to increase the service life of the electrode, but a thick Fe-Zn alloy phase having high hardness will be formed at the interface, such that the galvanized layer will be exfoliated during the processing of automotive bodies. For this reason, the upper limit of the ratio of Fe-Zn alloy phase is preferably 20%. However, for a balance between coating adhesion and spot weldability, the ratio of the Fe-Zn alloy phase is more preferably 5-15%.

The Fe-Zn alloy phase preferably includes 3-15 wt% Fe and a balance of zinc and inevitable impurities. Examples of the Fe-Zn alloy phase include a zeta (ζ, FeZn₁₃) phase and a delta 1 (δ₁, FeZn₇) phase, which have a low iron content, as well as other Fe-Zn alloy phases. Also, the Fe-Zn alloy phase of the present invention may be not only in the form of a single phase, but also in the form of complex phases. In the present invention, the ratio of the area covered by the alloying barrier layer (Fe₂Al₅₋ₓZnₓ) formed at the interface between the base steel sheet and the galvanized layer is preferably 30% or less. If the ratio of the area covered by the alloying barrier layer is more than 30%, the diffusion of Fe into the galvanized layer will be reduced, such that an appropriate Fe-Zn alloy layer cannot be formed, and zinc will be excessively melted by the application of an electric current during spot welding, thus deteriorating the weldability of the steel sheet.

The content of Fe in the galvanized layer of the galvanized steel sheet of the present invention is preferably 0.5-3.0 wt%. The content of Fe indicates the preferred content of Fe not only in the galvanized layer, but also in the alloy layer and plating layers other than the base steel sheet.

In another aspect, the present invention provides a hot-dip galvanized steel sheet in which an Fe-Ni-Zn alloy phase that accounts for 1-20% of the cross-sectional area of the galvanized layer is formed at the interface between the base steel sheet and the galvanized layer.

In the case of a high-strength galvanized steel sheet obtained by plating zinc on an Ni layer plated on a base steel sheet, if the fraction of the area covered by the Fe-Ni-Zn alloy phase formed at the interface between the base steel sheet and the galvanized layer is controlled at a specific level, the plating qualities of the steel sheet will be reduced, and the galvanized layer will be prevented from being exfoliated during a forming process, suggesting that the plating adhesion of the steel sheet will be improved. In addition, in a spot welding process during which an electric current is applied from an electrode through the Fe-Ni alloy layer to the base steel sheet, Fe will be instantaneously diffused from the steel sheet to form an Fe-Ni-Zn alloy phase, such that the alloying between the electrode and the galvanized layer will be delayed, thus increasing the service life of the welding electrode. Based on this recognition, the present inventors have invented a hot-dip galvanized steel sheet includes a Fe-Ni-Zn alloy phase at the interface between the base steel sheet and the galvanized layer at an area ratio of 1-20%.

If the fraction of the area of the alloy phase is more than 20%, the fraction of the area of the alloying barrier layer that enhances zinc wettability will be decreased, and a thick Fe-Ni-Zn alloy phase having a high level of hardness compared to the galvanized layer will be formed, such that the galvanized layer will be exfoliated. On the other hand, if the fraction of the area of the Fe-Ni-Zn alloy phase is less than 1%, the alloying barrier layer will be widely distributed to improve the plating adhesion of the steel sheet, but the alloying barrier layer will prevent an electric current from being applied from the electrode to the steel sheet during the spot welding process, such that the alloying between zinc and the electrode by the melting of zinc will be promoted, thereby reducing the service life of the electrode, thus deteriorating the spot weldability of the steel sheet. For this reason, in order to improve both the plating adhesion and spot weldability of the steel sheet, the fraction of the area of the Fe-Ni-Zn alloy phase which is formed at the interface between the base steel sheet and the galvanized layer needs to be limited to about 1-20%.

More preferably, if the fraction of the area of the Fe-Ni-Zn alloy phase which is formed at the interface between the base steel sheet and the galvanized layer is limited to 5-15%, the Fe-Al alloying barrier layer will be formed such that the adhesion of the galvanized layer to the base steel sheet can be maintained at a suitable level, and the Fe-Ni-Zn alloy phase will be sufficiently formed such that an electric current can be appropriately applied from the electrode to the base steel sheet, thereby maximizing the plating adhesion and spot weldability of the steel sheet.

Also, the base steel sheet preferably includes 0.5 wt% or more of at least one selected from the group consisting of Si, Mn and Al. Because the above-described problems related to non-plating, plating peeling off, and the deterioration of spot weldability are mainly problematic in high-strength steels containing a large amount of Si, Mn or Al, the above-described effects can be maximized in the case of a steel sheet containing 0.5 wt% or more of Si, Mn or Al.

Hereinafter, the method for manufacturing the hot-dip galvanized steel sheet will be described in detail. One aspect of the present invention provides a method for manufacturing a hot-dip galvanized steel sheet having excellent plating qualities, plating adhesion and spot weldability, the method including feeding and immersing a base steel sheet in a galvanizing bath having an effective Al concentration of (C_{Al}) of 0.11-0.14 wt% and a temperature (Tp) of 440∼460 °C, thereby hot-dip galvanizing the base steel sheet, wherein the temperature (Xₛ) at which the base steel sheet is fed into the galvanizing bath satisfies the following relationship: (Xₛ-Tₚ)/2C_{Al}: 20-100 (X_{S}: the feed temperature of the steel sheet, Tₚ: the temperature of the galvanized steel sheet, and C_{Al}: the Al content (wt%) of the galvanizing bath). The effective Al concentration (C_{Al}) of the hot-dip galvanizing bath is preferably 0.11-0.14 wt%. If the Al content of the hot-dip galvanizing bath is less than 0.11%, the steel sheet can be melted in the galvanizing bath to form an Fe-Zn compound, called "dross", which will float in the galvanizing bath and can partially adhere to the steel sheet again to cause dross defects. On the other hand, if the Al content is more than 0.14%, the desired Fe-Zn alloy phase at the interface between the galvanized steel (GI) sheet and the galvanized layer cannot be obtained even if the temperature of the galvanizing bath or the feed temperature of the steel sheet is controlled. For this reason, the Al content is preferably limited to 0.11-.14%.

Also, the temperature of the galvanizing bath is preferably limited to 440∼460 °C. If the temperature of the galvanizing bath is lower than 440 °C, the viscosity of the galvanizing bath will increase, such that the driving property of a roll in the galvanizing bath will decrease to cause the slippage of the steel sheet, thus causing defects on the steel sheet. On the other hand, if the temperature of the galvanizing bath is higher than 460 °C, the melting rate of the steel sheet in the galvanizing bath will increase, such that the amount of dross in the galvanizing bath will undesirably increase. For this reason, the temperature of the galvanizing bath is preferably limited to 440∼460 °C.

The present inventors have found that, when the steel sheet is fed into the galvanizing bath, as the temperature of the galvanizing bath and the feed temperature of the steel sheet increase, the Fe-Zn alloying reaction is promoted, and as the Al content of the galvanizing bath increases, the Fe-Zn alloying reaction is inhibited. Also, the present inventors have found that, if the feed temperature of the steel sheet is higher than the temperature of the galvanizing bath, the Fe-Zn alloying reaction will occur, and as the difference between the feed temperature (X_{S}) of the steel sheet and the temperature (Tp) of the galvanizing bath increases, the ratio of the alloy phase at the interface increases.

Accordingly, in the present invention, the Al content of the galvanizing bath was controlled to 0.11-0.14 wt%, and the temperature of the galvanizing bath was maintained at 440∼460 °C such that the feed temperature of the steel sheet satisfied the above-described relationship, whereby it was possible to ensure the Fe-Zn alloy phase at the interface between the galvanized layer and the base steel sheet at an area ratio of 1-20%.

In the above-described relationship, if the value of (X_{S}-Tₚ)/2C_{Al} is less than 20, the fraction of the area of the Fe-Zn alloy phase at the galvanized layer and the base steel sheet will be less than 1%, and if the value of (X_{S}-Tₚ)/2C_{Al} is higher than 100, the fraction of the area of the Fe-Zn alloy phase at the interface between the galvanized layer and the base steel sheet will be more than 20%, thus making it impossible to obtain a hot-dip galvanized steel sheet having excellent plating adhesion and weldability.

As described above, if the Al content of the galvanizing bath is controlled to 0.11-0.14 wt% and if the feed temperature of the steel sheet is controlled to satisfy the above-described relationship after maintaining the temperature of the galvanizing temperature at 440∼460 °C, the fraction of the area of the Fe-Zn alloy phase at the interface between the galvanized layer and the base steel sheet will become 1-20% of the cross-sectional area of the galvanized layer, such that a hot-dip galvanized steel sheet having excellent plating adhesion and weldability can be manufactured.

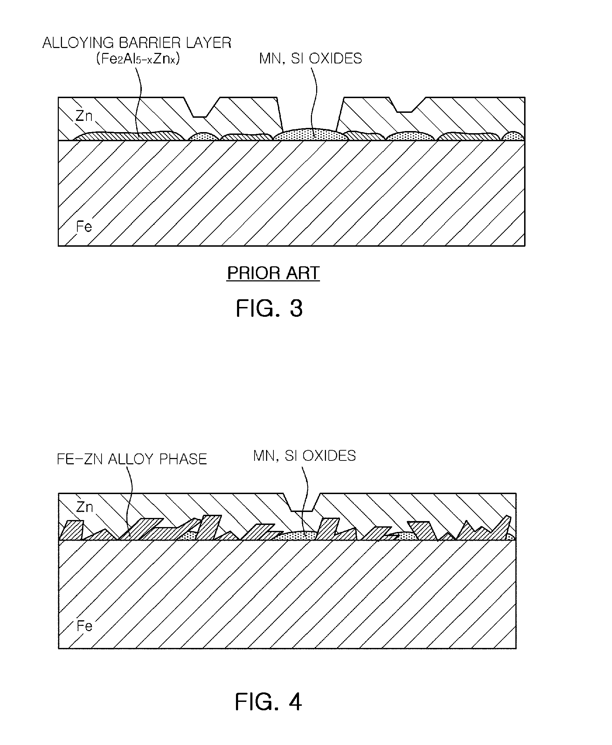

Examples of the steel sheet that is used in the present invention include cold-rolled steel sheets and hot-rolled steel sheets, including soft steel sheets, dual phase steel, transformation-induced plasticity (TRIP) steel, and complex phase steel. Thus, the kind of steel sheet that is used in the present invention is not limited. Particularly, advanced high-strength steel (AHSS) contains a relatively large amount of an easy-to-oxidize element such as Mn or Si. Thus, an Mn or Si oxide on the surface of ASSH steel is concentrated during a reducing annealing process, and if the ASSH steel is fed into a galvanizing bath in that state, an alloying barrier layer will not be formed in the portion in which the oxide is present, and also the zinc wettability of the portion will be poor. Thus, as shown in FIG. 3, a large area of non-galvanized portions will occur.

However, if the same AHSS steel is galvanized according to the present invention, as shown in FIG. 4, the portion in which the oxides are present will have poor wettability with zinc, and thus zinc will not adhere to that portion, but in the portion in which no oxide is present or the portion in which the oxide has a very small thickness such that it cannot prevent zinc from being diffused to the base steel, an Fe-Zn alloy phase will be produced. While this Fe-Zn alloy phase is produced and grows, it invades part or all of the adjacent oxide, thus reducing the problem of non-galvanization.

According to the present invention, an Fe-Zn alloy phase that accounts for 1-20% of the cross-sectional area of the galvanized layer is formed at the interface between the base steel sheet and galvanized layer of the galvanized steel sheet. The Fe-Zn alloy phase can prevent the galvanized layer from being peeled off under conventional automotive manufacturing conditions. In addition, it can prevent zinc from being easily diffused to the welding electrode because of a Zn-Fe alloying reaction resulting from the diffusion of Fe, which occurs immediately after the steel sheet has been heated by the application of an electric current through the welding electrode during a spot welding process. Thus, the Fe-Zn alloy phase has the effect of increasing the service life of the spot welding electrode.

In another aspect, the present invention provides a method for manufacturing a hot-dip galvanized steel sheet having excellent plating qualities, plating adhesion and spot weldability, the method including: coating a base steel sheet with Ni in a coating amount (C_{Ni}) of 0.1-1.0 g/m²; heating the Ni-coated steel sheet in a reducing atmosphere; cooling the heated steel sheet to the temperature (X_{S}) at which the steel sheet is fed into a galvanizing bath; and feeding and immersing the cooled steel sheet in the galvanizing bath having an effective Al concentration (C_{Al}) of 0.11-0.14 wt% and a temperature (T_{P}) of 440∼460 °C, wherein the temperature (X_{S}) at which the steel sheet is fed into the galvanizing bath satisfies the following relationship: C_{Ni} · (X_{S}-T_{P})/2C_{Al} = 5-100.

The present inventors have conducted studies for a long time and, as a result, found that the above-described manufacturing method allows an Fe-Ni-Zn alloy phase to be incorporated into the interface between the base steel sheet and the galvanized layer at an area ratio of 1-20 %. Namely, the present inventors have found that plating adhesion and spot weldability can be simultaneously improved by controlling parameters, including the amount of Ni coated, the Al concentration of the galvanizing bath, and the difference between the temperature of the galvanizing bath and the temperature at which the steel sheet is fed into the galvanizing bath.

With respect to the above-described parameters, the base steel sheet is coated with Ni, and thus an Fe-Ni alloy layer is formed by the diffusion between Fe and Ni. In the case of a high-strength steel, the Fe-Ni alloy layer acts to prevent a large amount of Si, Mn or Al contained in the steel from being diffused from the base steel sheet into the galvanized layer to form an oxide of Si, Mn or Al, thereby preventing the occurrence of non-galvanized portions. Also, the effective Al concentration of the galvanizing bath influences the dissolution of Fe-Ni in a process during which the steel sheet is immersed in the galvanizing bath, so that it determines the thickness of the Fe-Ni alloy layer, which directly influences the amount of an Si, Mn or Al oxide that is formed at the interface. In addition, the effective Al concentration has an important effect on the ratio of the area of the Fe-Al alloying barrier layer to the area of the interface. Moreover, the difference between the temperature of the galvanizing bath and the temperature at which the steel sheet is fed into the galvanizing bath is involved in the diffusion of Fe, and thus influences the formation of the Fe-Ni-Zn alloy layer.

Specifically, the amount of Ni coated is preferably limited to 0.1-1.0 g/m². If the amount of Ni coated is less than 0.1 g/m², the amount of Ni that is coated on the surface of the base steel sheet will be excessively small, such that uniform Ni coating will not be achieved, and thus a region on which an Ni coating layer is not formed will occur. Accordingly, a large amount of Si, Mn or Al contained in the high-strength steel will be concentrated on the surface of the steel sheet during an annealing process to form an oxide, thereby deteriorating the weldability of the steel sheet. For this reason and in view of economy and the saturation of effects, the upper limit of the amount of Ni coated is determined to be 1.0 g/m².

Particularly, it is important to control the amount of Ni coated to 0.1-1.0 g/m² and to control the effective Al concentration of the galvanizing bath to 0.11-0.14 wt% and also to maintain the temperature of the galvanizing bath at 440∼460 °C, such that the temperature (X_{S}) at which the steel sheet is fed into the galvanizing bath satisfies the following relationship: C_{Ni} · (X_{S}-T_{P})/2C_{Al} = 5∼100. If the value of C_{Ni} · (X_{S}-T_{P})/2C_{Al}, relating to the feed temperature (X_{S}) of the steel sheet is less than 5, the diffusion of Fe will be insignificant such that the fraction of the area covered by the Fe-Ni-Zn alloy phase will be 1% or less, because the difference between the feed temperature of the steel sheet and the temperature of the galvanizing bath is not sufficient. On the other hand, if the value of C_{Ni} · (X_{S}-T_{P})/2C_{Al} is more than 100, the difference between the temperatures will be excessively great, and thus the diffusion of Fe will excessively occur such that the ratio of the area covered by the Fe-Ni-Zn alloy phase will exceed 20 %. For this reason, in order to obtain the Fe-Ni-Zn alloy phase at an area ratio of 1-20 %, the temperature (X_{S}) at which the steel sheet is fed into the galvanizing bath should be controlled to satisfy the relationship C_{Ni} · (X_{S}-T_{P})/2C_{Al} = 5∼100. By doing so, a high-strength, hot-dip galvanized steel sheet having excellent plating qualities, plating adhesion and spot weldability can be manufactured.

Herein, the temperature (X_{S}) at which the steel sheet is fed into the galvanizing bath more preferably satisfies the following relationship: C_{Ni} · (X_{S}-T_{P})/2C_{Al} = 30~70. This is because, when the fraction of the area of the Fe-Ni-Zn alloy phase is 5-15%, a more excellent effect is shown, and in order to obtain this fraction of area, the value of C_{Ni} · (X_{S}-T_{P})/2C_{Al} should also be limited to 30-70.

Also, the heating step is preferably carried out at 750∼850 °C in order to ensure excellent steel properties, including tensile strength and elongation. In addition, the base steel sheet preferably includes 0.05% or more of at least one selected from the group consisting of Si, Mn and Al.

### [Mode for Invention]

Hereinafter, the present invention will be described in further detail with reference to examples.

### (Example 1)

A dual-phase cold-rolled steel sheet was used as a material. The cold-rolled steel sheet had a thickness of 1.2 mm. After removing rolling oil and impurities from the surface, the steel sheet was annealed at 800 °C for 60 seconds in a 5% H₂-N₂ atmosphere, and immersed in a hot-dip galvanizing bath under conditions of the temperature of the hot-dip galvanizing bath, the Al content of the galvanizing bath, and (X_{S}-Tₚ)/C_{Al}, as shown in Table 1 below, thereby hot-dip galvanizing the steel sheet. Herein, the steel sheet was dipped for 3 seconds.

Immediately after the steel sheet had been discharged from the galvanizing bath, it was air-wiped such that the amount of plating on the steel sheet surface was 60 g/m² (on a single surface basis). After the completion of the galvanization, the steel sheet was cross-sectioned, polished and etched, and the cross section of the galvanized layer was photographed with an electron microscope.

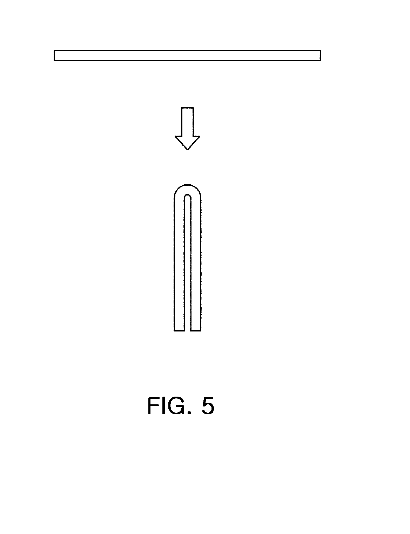

Based on the obtained photograph, the ratio of the interfacial Fe-Zn alloy phase in the entire cross-sectional area of the galvanized layer was analyzed using an image analyzer, and the results of the analysis are shown in Table 1 below. Also, to determine the adhesion of the galvanized layer, the steel sheet was subjected to a 0-T bending test in which it was bent at an angle of 180° as shown in FIG. 5. Next, transparent vinyl tape was attached to the galvanized layer and then detached. The plating adhesion of the steel sheet was then evaluated according to the following criteria: "peeled" the galvanized layer is found on the tape; and "excellent" no galvanized layer is to be found on the tape. The evaluation results are shown in Table 1 below.

The spot weldability of the steel sheet was evaluated by performing continuous spot welding using Cu-Cr electrodes having a tip diameter of 6 mm under the conditions of an electrode force of 2.8 kN, a welding time of 13 cycles, a holding time of 5 cycles, and a welding current of 7 kA. The number of continuous welding spots at the time when the nugget diameter reached 4√ t (t: steel sheet thickness) was measured.

**[Table 1]**

| | **Temperature of galvanizing bath (°C)** | **Al content (wt%) of galvanizing bath** | **(Xₛ-Tₚ) /(2*C_{Al})** | **Ratio (%) of area of interfacial Fe-Zn alloy phase** | **Plating adhesion** | **Number of continuous welding spots** |
|---|---|---|---|---|---|---|
| **Inventive Example 1-1** | **442** | **0.118** | **99** | **8.2** | **Excellent** | **1890** |
| **Inventive Example 1-2** | **450** | **0.122** | **40** | **6.8** | **Excellent** | **1764** |
| **Inventive Example 1-3** | **450** | **0.135** | **73** | **1.5** | **Excellent** | **1500** |
| **Inventive Example 1-4** | **450** | **0.123** | **78** | **18.4** | **Excellent** | **2690** |
| **Inventive Example 1-5** | **450** | **0.13** | **77** | **9.8** | **Excellent** | **2065** |
| **Inventive Example 1-6** | **450** | **0.13** | **28** | **14.6** | **Excellent** | **2369** |
| **Inventive Example 1-7** | **450** | **0.128** | **98** | **7.2** | **Excellent** | **1775** |
| **Inventive Example 1-8** | **455** | **0.128** | **75** | **4.8** | **Excellent** | **1810** |
| **Inventive Example 1-9** | **455** | **0.128** | **22** | **3.4** | **Excellent** | **1698** |
| **Inventive Example 1-10** | **460** | **0.138** | **78** | **3.5** | **Excellent** | **1712** |
| **ComparativeExample 1-1** | **440** | **0.127** | **5** | **0.8** | **Excellent** | **1321** |
| **Comparative Example 1-2** | **455** | **0.135** | **15** | **0.7** | **Excellent** | **1296** |
| **Comparative Example 1-3** | **455** | **0.101** | **89** | **65** | **Peeled** | **2909** |
| **Comparative Example 1-4** | **455** | **0.16** | **28** | **0** | **Excellent** | **1150** |
| **Comparative Example 1-5** | **455** | **0.2** | **95** | **0** | **Excellent** | **1069** |
| **Comparative Example 1-6** | **470** | **0.101** | **35** | **41** | **Peeled** | **2856** |
| **Comparative Example 1-7** | **460** | **0.125** | **115** | **29** | **Peeled** | **2740** |
| **Comparative Example 1-8** | **460** | **0.125** | **150** | **35** | **Peeled** | **2829** |

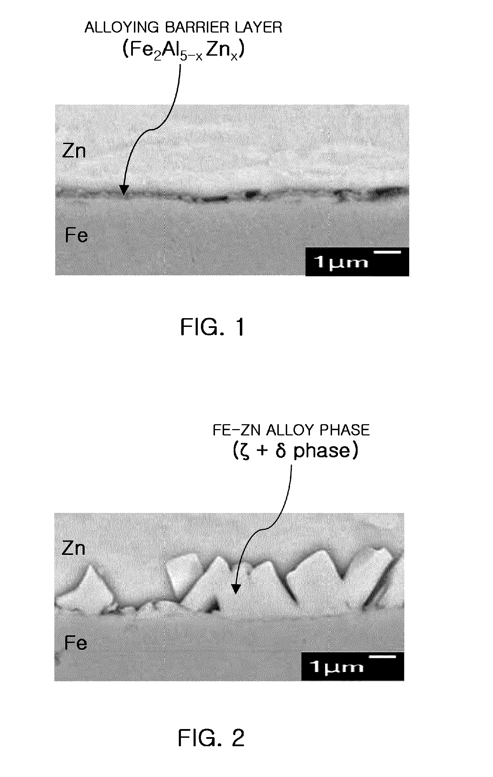

As can be seen in Table 1 above, in the case of Inventive Examples 1-1 to 1-10 according to the present invention, the Fe-Zn alloy phase accounting for 1-20% of the cross-sectional area of the galvanized layer was formed at the interface between the base steel sheet and the galvanized layer. Thus, the adhesion of the galvanized layer was excellent, and the number of continuous welding spots was 1500 or more, suggesting that the spot weldability of the steel sheet was excellent. FIG. 2 shows the cross section of the hot-dipped galvanized steel sheet according to Inventive Example 1-6, and as can be seen therein, the Fe-Zn alloy phase (ζ + δ phase) was formed at the interface between the base steel sheet (Fe) and the galvanized layer (Zn).

On the contrary, in the case of Comparative Example 1-1, the temperature of the galvanizing bath and the Al content of the galvanizing bath were within the ranges limited by the present invention, but the feed temperature of the steel sheet did not satisfy the relationship (X_{S}-Tₚ)/2C_{Al} = 20∼100. In this case, the ratio of the area of the interfacial Fe-Zn alloy was lower than the lower limit of the range limited by the present invention, and thus the number of continuous welding spots was 1321, suggesting that the spot weldability was relatively poor.

In the case of Comparative Example 1-2, the temperature of the galvanizing bath and the aluminum content of the galvanizing bath were within the ranges limited by the present invention, but the feed temperature of the steel sheet was lower than the lower limit of (X_{S}-Tₚ)/2C_{Al} = 20∼100. In this case, the ratio of the area of the interfacial Fe-Zn alloy phase was lower than the lower limit of the range limited by the present invention, and thus the plating adhesion of the steel sheet was excellent, but the number of continuous welding spots was 1296, indicating that the spot weldability of the steel sheet was relatively poor.

Meanwhile, in the case of Comparative Example 1-3 in which the Al content of the galvanizing bath was lower than the lower limit of the range limited by the present invention, the ratio of the area of the interfacial Fe-Zn alloy phase was out of the range limited by the present invention, and thus the galvanized layer was peeled off.

In the case of Comparative Examples 1-4 and 1-5 in which the Al content of the galvanizing bath was higher than the upper limit of the range limited by the present invention, the interfacial Fe-Zn alloy phase was not formed, indicating that the steel sheet had excellent plating adhesion, but the number of continuous welding spots was 1150 or less, indicating that the weldability of the steel sheet was relatively poor. Particularly, as can be seen in FIG. 1, in Comparative Example 1-4, only the alloying blocking layer (Fe₂Al₅₋ₓZnₓ) was formed at the interface between the base steel sheet and the galvanized layer to a thickness of about 100 nm.

In the case of Comparative Example 1-6 in which the temperature of the galvanizing bath was higher than the upper limit of the range limited by the present invention and also in which the Al content of the galvanizing bath was lower than the lower limit of the range limited by the present invention, the ratio of the area of the interfacial Fe-Zn alloy phase was higher than the upper limit of the range limited by the present invention, and thus the galvanized layer was peeled off, indicating that the plating adhesion of the steel sheet was poor. Meanwhile, in the case of Comparative Examples 1-7 and 1-8, the temperature of the galvanizing bath and the Al content of the galvanizing bath were within the ranges limited by the present invention, but the feed temperature of the steel sheet was higher than the upper limit of (X_{S}-Tₚ)/2C_{Al} = 20∼100. In this case, the ratio of the area of the interfacial Fe-Zn alloy phase was higher than the upper limit of the range limited by the present invention, and thus the peeling off of the galvanized layer occurred, indicating that the plating adhesion of the steel sheet was poor.

### (Example 2)

A steel sheet was cold-rolled, degreased and pickled, thus cleaning the steel sheet surface. Then, the steel sheet was annealed at 800 °C for 60 seconds in a reducing atmosphere of nitrogen containing 5% hydrogen. The annealed steel sheet was immersed for 3 seconds in a galvanizing bath under the conditions of the effective Al concentration and galvanizing bath temperature shown in Table 2 below. Then, the steel sheet was air-wiped such that the amount of plating on the surface was maintained at a level of 60 g/m².

In order to evaluate the plating qualities of the steel sheet which had been subjected to the galvanizing process, the ratio of the area covered by the galvanized layer relative to the entire area of the plated surface was measured. For cross-sectional observation, the steel sheet specimen was cut to a size of 15 x 15 mm², the cross section of the cut sample was polished, and then the galvanized layer was observed with a scanning electron microscope. The fraction of the area of the Fe-Ni-Zn alloy phase in the galvanized layer was measured in five places using an image analyzer, and the measurements were averaged. The results of the measurement are shown in Table 2 below. Also, to measure the plating adhesion of the steel sheet, the steel sheet was cut to a size of 30 x 80 mm², and the cut sample was bent at an angle of 180° and then subjected to a bending test. The sample was subjected to 0-T or 1-T bending depending on the properties of the steel sheet, such that the steel sheet was not broken. A transparent vinyl tape was attached to the bent portion and then detached. Then, the plating adhesion of the steel sheet was evaluated according to the following criteria: "peeled" the galvanized layer was found on the tape; and "excellent" no galvanized layer was to be found on the tape. The evaluation results are shown in Table 2 below.

In addition, the spot weldability of the steel sheet was evaluated by performing continuous spot welding using Cu-Cr electrodes having a tip diameter of 6 mm under the conditions of an electrode force of 2.8 kN, a welding time of 13 cycles, a holding time of 5 cycles, and a welding current of 7 kA. The number of continuous welding spots at the time the nugget diameter reached 4√t (t: steel sheet thickness) was measured. Then, the spot weldability of the steel sheet was evaluated according to the following criteria: "excellent" 1500 or more continuous welding spots; and "poor": 1500 or less continuous welding spots. The evaluation results are shown in Table 2 below.

**[Table 2]**

| | **Amount (g/m²) of Ni plated** | **Effective Al concentration (wt%) of galvanizing bath** | **Temperature (°C) of galvanizing bath** | **C_{Ni} ·(X_{S}**-**T_{P})/2C_{Al}** | **Fraction (%) of area of interfacial Fe-Ni-Zn alloy phase** | **Ratio (%) of area covered by galvanized layer** | **Plating adhesion** | **Spot weldability** |
|---|---|---|---|---|---|---|---|---|
| **Inventive Example 2-1** | **0.13** | **0.114** | **449** | **12.0** | **1.1** | **90** | **Excellent** | **Excellent** |
| **Inventive Example 2-2** | **032** | **0.126** | **440** | **38.1** | **4.5** | **95** | **excellent** | **Excellent** |
| **Inventive Example 2-3** | **0.64** | **0.129** | **450** | **49.6** | **18.2** | **94** | **Excellent** | **Excellent** |
| **Inventive Example 2-4** | **0.29** | **0.132** | **460** | **11.0** | **123** | **99** | **Excellent** | **Very excellent** |
| **Inventive Example 2-5** | **0.61** | **0.133** | **445** | **573** | **14.2** | **98** | **Excellent** | **Very excellent** |
| **Comparative Example 2-1** | **1.25** | **0.113** | **450** | **110.6** | **24.0** | **100** | **Peeled** | **Excellent** |
| **Comparative Example 2-2** | **0.05** | **0.112** | **450** | **4.5** | **0.7** | **70** | **Peeled** | **Poor** |
| **Comparative Example 2-3** | **0.11** | **0.105** | **448** | **1115** | **0.9** | **83** | **peeled** | **excellent** |
| **Comparative Example 2-4** | **0.14** | **0.23** | **452** | **5.5** | **0.4** | **90** | **Excellent** | **Poor** |
| **Comparative Example 2-5** | **0.27** | **0.128** | **465** | **53** | **22.0** | **88** | **Peeled** | **Excellent** |
| **Comparative Example 2-6** | **0.11** | **0.140** | **458** | **4.7** | **0.8** | **87** | **Excellent** | **Poor** |

In the case of Inventive Examples 2-1 to 2-5, the amount of Ni plated, the effective Al concentration of the galvanizing bath, the temperature of the galvanizing bath, and the value of C_{Ni} · (X_{S}-T_{P})/2C_{Al} were all within the ranges limited by the present invention, and thus the fraction of the area of Fe-Ni-Zn at the interface between the base steel sheet and the galvanized layer was within the range of 1-20%. Accordingly, it could be seen that the ratio of the area covered by the galvanized layer was 90% or more, indicating that the steel sheet had excellent plating qualities. Also, there was no peeled portion, indicating that the steel sheet had excellent plating adhesion and excellent spot weldability. Particularly, in the case of Inventive Examples 2-4 and 2-5, the fraction of the area of the Fe-Ni-Zn alloy phase at the interface was within the range of 5-15%, and the ratio of the area covered by the galvanized layer was 98% or more, suggesting that the steel sheet had very excellent plating qualities. Also, the number of continuous welding spots was very high, suggesting that the steel sheet had very excellent spot weldability. However, in the case of Comparative Example 2-1, the amount of Ni plated was excessively large, and thus the value of C_{Ni} · (X_{S}-T_{P})/2C_{Al} was more than 100. Thus, the fraction of the area of the Fe-Ni-Zn alloy phase at the interface was as high as 24%, and thus the galvanized layer was peeled off, indicating that the plating adhesion was poor.

Also, in the case of Comparative Example 2-2, the amount of Ni plated was too small, and thus the amount of C_{Ni} · (X_{S}-T_{P})/2C_{Al} was less than 5. Thus, the fraction of the area of the Fe-Ni-Zn alloy phase was also less than 1%. Accordingly, the amount of Ni plated was not sufficient, and thus a large amount of an Si, Mn or Al oxide was formed on the surface of the steel sheet, and the ratio of the area covered by the galvanized layer was 70%, so that a significant number of non-galvanized portions appeared, the galvanized layer was peeled off, and the spot weldability was poor.

In the case of Comparative Example 2-3 in which the effective Al concentration of the galvanizing bath was lower than the lower limit of the range limited by the present invention, dross defects in the form of Fe-Ni-Zn compounds occurred and a large number of non-galvanized portions appeared, indicating that the plating qualities of the steel sheet were poor. In addition, the galvanized layer was peeled off, indicating that the plating adhesion of the steel sheet was poor.

In the case of Comparative Example 2-4 in which the effective Al concentration of the galvanizing bath was higher than the upper limit of the range limited by the present invention, it was easy to form the Fe-Al alloying barrier layer, and thus the steel sheet had excellent plating qualities and plating adhesion, but it was relatively difficult to form the Fe-Ni-Zn alloy phase, and thus the ratio of the area of the Fe-Ni-Zn alloy phase was less than 1%. This suggests that the spot weldability of the steel sheet was poor.

In the case of Comparative Example 2-5 in which the temperature of the galvanizing bath was higher than the upper limit of the range limited by the present invention, the melting of the steel sheet was promoted, to accelerate the occurrence of dross defects in the form of Fe-Ni-Zn compounds. Due to such dross defects, the ratio of the area covered by zinc was deceased to a level of 88%, indicating that the plating qualities of the steel sheet were poor, and also the galvanized layer was peeled off.

In the case of Comparative Example 2-6, the amount of Ni coated, the effective Al concentration of the galvanizing bath, and the temperature of the galvanizing bath were within the ranges limited by the present invention, but the temperature at which the steel sheet was fed into the galvanizing bath did not satisfy the relationship C_{Ni} · (X_{S}-T_{P})/2C_{Al} = 5∼100, and thus the ratio of the area covered by zinc was only 87%, indicating that the plating qualities of the steel sheet were poor. Also, the fraction of the area of the Fe-Ni-Zn alloy phase at the interface was less than 1%, and thus the spot weldability of the steel sheet was poor.

As described above, in the hot-dip galvanized steel sheet which is provided according to the present invention, the alloy phase is appropriately formed at the interface between the base steel sheet and the interface, whereby it is possible to prevent the galvanized layer from being peeled off under conventional automotive manufacturing conditions, thereby improving the plating qualities and plating adhesion of the galvanized steel sheet and also increasing the service life of spot welding electrodes.

While the present invention has been shown and described in connection with the exemplary embodiments, it will be apparent to those skilled in the art that modifications and variations can be made without departing from the spirit and scope of the invention as defined by the appended claims.

## Claims

1. A hot-dip galvanized steel sheet having excellent plating qualities, plating adhesion and spot weldability, in which an alloy phase is formed at the interface between a base steel sheet and a galvanized layer.

2. The hot-dip galvanized steel sheet of claim 1, wherein the alloy phase is an Fe-Zn alloy phase accounting for 1-20% of the cross-sectional area of the galvanized layer

3. The hot-dip galvanized steel sheet of claim 2, wherein the Fe-Zn alloy phase accounts for 1-15 wt% of the cross-sectional area of the galvanized layer.

4. The hot-dip galvanized steel sheet of claim 2, wherein the Fe-Zn alloy phase comprises 3-15 wt% Fe and a balance of zinc and inevitable impurities.

5. The hot-dip galvanized steel sheet of claim 2, wherein the Fe-Zn alloy phase is in the form of a single phase or complex phase of a zeta (ζ FeZn₁₃)phase and a delta 1 (δ₁, FeZn₇) phase.

6. The hot-dip galvanized steel sheet of claim 2, wherein the ratio of the area covered by an alloying barrier layer (Fe₂Al₅₋ₓZnₓ) at the interface between the base steel sheet and galvanized layer of the hot-dip galvanized steel sheet is 30% or less.

7. The hot-dip galvanized steel sheet of claim 2, wherein the galvanized layer of the hot-dip galvanized steel sheet has an Fe content of 0.5-3.0 wt%.

8. The hot-dip galvanized steel sheet of claim 1, wherein the alloy phase is an Fe-Ni-Zn alloy phase accounting for 1-20% of the cross-sectional area of the galvanized layer.

9. The hot-dip galvanized steel sheet of claim 8, wherein the Fe-Ni-Zn alloy phase accounts for 5-15% of the cross-sectional area of the galvanized layer.

10. The hot-dip galvanized steel sheet of claim 1, wherein the base steel sheet comprises 0.5 wt% or more of at least one selected from the group consisting of Si, Mn and Al.

11. A method for manufacturing a hot-dip galvanized steel sheet having excellent plating qualities, plating adhesion and spot weldability, the method comprising feeding and immersing a base steel sheet in a galvanizing bath having an effective Al concentration of (C_{Al}) of 0.11-0.14 wt% and a temperature (Tp) of 440∼460 °C, thereby hot-dip galvanizing the base steel sheet, wherein the temperature (X_{S}) at which the base steel sheet is fed into the galvanizing bath satisfies the following relationship: (Xₛ-Tₚ)/2C_{Al} = 20-100.

12. A method for manufacturing a hot-dip galvanized steel sheet having excellent plating qualities, plating adhesion and spot weldability, the method comprising:
coating a base steel sheet with Ni in a coating amount (C_{Ni}) of 0.1-1.0 g/m²;
heating the Ni-coated steel sheet in a reducing atmosphere;
cooling the heated steel sheet to the temperature (X_{S}) at which the steel sheet is fed into a galvanizing bath; and
feeding and immersing the cooled steel sheet in the galvanizing bath having an effective Al concentration (C_{Al}) of 0.11-0.14 wt% and a temperature (T_{P}) of 440-460 °C, wherein the temperature (X_{S}) at which the steel sheet is fed into the galvanizing bath satisfies the following relationship: C_{Ni} · (X_{S}-T_{P})/2C_{Al} = 5-100.

13. The method of claim 12, wherein the temperature (X_{S}) at which the steel sheet is fed into the galvanizing bath satisfies the following relationship: C_{Ni} · (X_{S}-T_{P})/2C_{Al} = 30-70.

14. The method of claim 12, wherein the heating step is carried out at 750∼850 °C.

15. The method of any one of claims 11 to 14, wherein the base steel sheet is a hot-rolled steel sheet or a cold-rolled steel sheet.

16. The method of any one of claims 11 to 14, wherein the base steel sheet comprises 0.5 wt% or more of at least one selected from the group consisting of Si, Mn and Al.
